Europäisches Patentamt

European Patent Office

Office européen des brevets

(19)

(11) Numéro de publication : **0 600 800 A1**

(12) # DEMANDE DE BREVET EUROPEEN

(21) Numéro de dépôt : **93402928.1**

(22) Date de dépôt : **02.12.93**

(51) Int. Cl.⁵ : **G01B 11/24,** G01B 11/02

(30) Priorité : **04.12.92 FR 9214613**

(43) Date de publication de la demande :
**08.06.94 Bulletin 94/23**

(84) Etats contractants désignés :
**DE FR GB IT**

(71) Demandeur : **COMMISSARIAT A L'ENERGIE ATOMIQUE**
**31-33, rue de la Fédération**
**F-75015 Paris (FR)**

(72) Inventeur : **Peltie, Philippe**
**Villa Vers Le Mont,**
**Saint Paul de Varces**
**F-38760 Varces (FR)**

(74) Mandataire : **Dubois-Chabert, Guy et al**
**c/o BREVATOME**
**25, rue de Ponthieu**
**F-75008 Paris (FR)**

(54) **Procédé et dispositif d'acquisition d'une image à trois dimensions d'un petit objet par palpage lumineux et moyen d'étalonnage pour la mise en oeuvre d'une telle acquisition.**

(57) l'invention concerne un procédé d'acquisition d'une image à trois dimensions d'un petit objet par palpage lumineux dans lequel :
— on scanne l'objet avec un pinceau cohérent selon un premier axe (X) ;
— on déplace l'objet selon un second axe (Y) perpendiculairement au premier ;
— on analyse le pinceau réfléchi par l'objet à l'aide d'une caméra de type CCD linéaire, en comparant le signal vidéo sortant de la caméra à un seuil préalablement défini, en mémorisant l'adresse du premier pixel concerné, lorsque ce seuil est franchi, ainsi que la valeur des p pixels suivants correspondant à la tache image (33) ;
— on obtient les coordonnées de l'objet selon le troisième axe (Z) par triangulation laser avec balayage point par point, en considérant que tout point dans le champ de vue de la caméra avec ses coordonnées trois dimensions est une combinaison linéaire de n points référence.
L'invention concerne également un dispositif d'acquisition d'une image à trois dimensions, ainsi qu'un moyen d'étalonnage.
Application notamment à l'usinage automatique de prothèses dentaires en céramique.

FIG. 1

EP 0 600 800 A1

Jouve, 18, rue Saint-Denis, 75001 PARIS

## Domaine technique

La présente invention concerne un procédé et un dispositif d'acquisition d'une image à trois dimensions d'un petit objet par palpage lumineux, notamment d'empreintes en plâtre dentaire en vue d'usiner automatiquement des prothèses dentaires. Elle concerne également un moyen d'étalonnage pour la mise en oeuvre d'une telle acquisition.

## Etat de la technique antérieure

Dans le domaine de l'usinage automatique de prothèses dentaires, que l'on considérera dans la suite de la description à titre d'exemple non limitatif, le prothésiste dessine une prothèse par CA0 sur une station de travail. Il a donc besoin de la description trois dimensions de l'empreinte en plâtre du moignon à recouvrir et de son environnement. Il utilise une station d'acquisition qui délivre des informations trois dimensions à la station de travail. Le temps visé pour obtenir toutes les vues du moignon est de l'ordre de 20', une seule vue n'étant pas suffisante pour décrire tout le moignon en raison des parties, cachées ou non, éclairées par le laser.

De nombreux procédés de l'art connu proposent des techniques de palpage à contact ou sans contact. Certains systèmes, par exemple le procédé "denticad", utilisent un outil qui suit le profil de la dent ou de son empreinte. Le mouvement de l'outil est repéré dans un trièdre absolu XYZ par des codeurs. Mais de tels systèmes sont lents et de précision limitée par le problème de contact.

D'autres systèmes de l'art connu utilisent un procédé dit de "phase shifting" qui est la projection de franges d'interférences sur l'objet à analyser. On analyse alors les déformations de la phase en fonction de l'altitude. Un tel procédé permet une acquisition rapide, mais le traitement d'images est important et long, la précision obtenue est médiocre et l'étalonnage est particulièrement complexe.

D'autres systèmes de l'art connu utilisent une méthode dite de "triangulation laser". Dans cette méthode une source de lumière laser projette un faisceau très fin de lumière cohérente sur l'objet à analyser, créant un spot lumineux circulaire. Un capteur optique détecte la position du spot lumineux au moyen d'un objectif. Une triangulation optique est alors réalisée par un microprocesseur.

Un article intitulé "Telecentric Scanner for 3D Sensing" de G. Häusler et M. Maul ("Optical Engineering", novembre-décembre 1985, vol. 24, n° 6) décrit l'utilisation d'une telle méthode dans le domaine de l'acquisition trois dimensions d'un objet. Mais cette technique de triangulation laser, qui est très utilisée, n'est pas adaptable à tous problèmes du fait de nombreuses difficultés inhérentes :
- dans les systèmes de triangulation à balayage point par point la cadence d'acquisition est limitée. Pour un point laser recherché, on doit souvent traiter une ligne, voire une image ;
- la profondeur de champ est limitée ;
- la variation d'intensité lumineuse émise est souvent cause d'erreurs ;
- les artefacts sont de plusieurs types :
  . les réflexions sur des parois métalliques créent deux, trois points aberrants : un plâtre ne crée pas de tels artefacts,
  . le point laser est dédoublé lorsque le faisceau laser tangente une surface : les deux points obtenus sont valides,
  . certains points éclairés par le laser ne sont pas vus par la caméra (ombres). Certains points sont cachés : ces artefacts ne peuvent être résolus simplement.

De plus la saisie trois dimensions de petits objets avec une précision requise importante sur des formes tourmentées, d'une part (environ 10 à 50 mm en X, Y, Z avec une précision de l'ordre de 10 $\mu$m), génère des artefacts et une profondeur de champ importante avec une distance de travail faible (10 cm environ). D' autre part, le compromis qui en résulte est très délicat à obtenir et, a priori, la méthode de triangulation par balayage point par point n'apparaît pas comme une solution viable.

Une autre difficulté des systèmes de l'art connu est celle de la rapidité et de la complexité de traitement des informations. Les opérateurs, qui travaillent avec la technique de triangulation laser en balayage point par point, utilisent, en effet, deux types de récepteur :
- des senseurs de position analogiques (photodiode de type "lateral effect"). Le procédé d'acquisition est rapide et simple. Mais ces senseurs présentent un premier inconvénient : lorsqu'il y a plusieurs taches (artefacts), la position calculée est le barycentre de ces points : on fait donc une erreur. Ils présentent un deuxième inconvénient : pour avoir une bonne résolution ils doivent recevoir une quantité de lumière importante : dix à cent fois celle qu'il est nécessaire pour une caméra CCD ;
- les caméras CCD linéaires ou matricielles.

On trouve ce type de caméras sur le marché avec sortie vidéo (2ms environ par ligne pour une barrette linéaire, 40 ms pour une CCD matricielle), couplée à une carte d'acquisition standard 512 x 512 ou 1024 x 1024. Ces caméras présentent un inconvénient majeur : pour un point adressé, on lit toute la ligne (2 ms dans le cas d'une barrette linéaire) ; on remplit une ligne mémoire de 1024 pixels où l'information utile occupe 8 à 16 pixels, le reste étant à zéro. Pour faire un profil de 1000 points il faut donc un temps de 2ms x 1000, soit 2s et il faut remplir une mémoire de 1 Moctet. Après quoi, il faut réaliser un traitement d'images pour extraire les pixels utiles.

Une autre difficulté des systèmes de l'art connu a trait à l'étalonnage. En effet, les opérateurs qui utilisent la triangulation sont obligés de connaître la focale du récepteur, la distance entre le centre de rotation de l'émetteur (galvanomètre) et le centre optique de l'optique réceptrice, et l'angle de triangulation. Ces différents paramètres sont très délicats à obtenir. Leur bonne ou mauvaise connaissance conditionne toute la précision de la triangulation et leur connaissance nécessite souvent un étalonnage coûteux. Les différentes méthodes de calibration, qui sont enseignées notamment dans un article intitulé "Measurement In Vision - The Need for Calibration" de John M. Blackwell et Deepum N. Bhatia (SPIE, vol. 654, "Automatic Optical Inspection", 1986), sont issues de problèmes très généraux de robotique mobile où l'on cherche la relation entre un référentiel caméra et un référentiel terrestre absolu. On repère les mires de calibration dans ce référentiel absolu. Compte tenu du champ important que l'on désire et aussi du fait que la caméra est la plupart du temps mobile (parce que liée au robot), le problème est donc complexe.

Un exemple d'étalonnage utilisé actuellement par le système "Sopha" avec la caméra fabriquée par la société Bertin utilisant une méthode de "phase shifting", est difficile et long (deux jours) car il faut trouver la relation entre la cote Z et le déphasage $\Delta\phi$ de la grille projetée sur l'objet ; ceci dans un volume important (20 x 20x 20 mm$^3$), trop important pour qu'il y ait une relation polynomiale simple entre Z et $\Delta\phi$.

Exposé de l'invention

La présente invention a pour objet de résoudre ces différents problèmes.

Elle propose à cet effet un procédé d'acquisition d'une image à trois dimensions d'un petit objet par palpage lumineux, caractérisé en ce que :
- on scanne l'objet avec un pinceau cohérent selon un premier axe (X) ;
- on déplace l'objet selon un second axe ($\gamma$) perpendiculairement au premier ;
- on analyse le pinceau réfléchi par l'objet à l'aide d'une caméra de type CCD linéaire, en comparant le signal vidéo sortant de la caméra à un seuil préalablement défini, en mémorisant l'adresse du premier pixel concerné, lorsque ce seuil est franchi, ainsi que la valeur des p pixels suivants correspondant à la tache image ;
- on obtient les coordonnées de l'objet selon le troisième axe (Z) par triangulation laser avec balayage point par point, en considérant que tout point dans le champ de vue de la caméra avec ses coordonnées trois dimensions est une combinaison linéaire de n points référence.

Ainsi, avantageusement, on requiert l'information utile lorsqu'elle se présente et on ne mémorise que cette information utile. Il en résulte un gain de temps et une compression d'informations (mémoire de taille réduite, pas de traitement d'images) et donc finalement un gain en coût de réalisation.

Avantageusement, pour avoir un maximum de précision, le seuil est placé le plus bas possible.

Avantageusement, on considère que l'objet à analyser se trouve dans un champ restreint. On utilise au moins un moyen d'étalonnage qui est le référentiel absolu, la caméra étant supposée fixe par rapport à ce référentiel.

L'invention propose également un dispositif d'acquisition d'images à trois dimensions de petits objets par palpage lumineux caractérisé en ce qu'il comprend :
- un bloc optique comportant :
  . une partie émission comprenant un émetteur optique colimaté envoyant un pinceau de lumière cohérente sur un miroir mobile qui balaie l'objet à travers une lentille télécentrique,
  . une partie réception comprenant une caméra de type CCD linéaire qui reçoit le pinceau rétrodiffusé par l'objet au travers d'un objectif
- un circuit électronique comportant :
  . un convertisseur analogique numérique disposé en sortie de caméra,
  . un comparateur du signal vidéo issu du convertisseur à un seuil préalablement défini,
  . un compteur générant l'adresse du premier pixel valide du signal vidéo,
  . une mémoire pour enregistrer les p pixels valides, et l'adresse du premier de ces p pixels ;
- un organe de traitement.

Avantageusement l'objectif comprend un filtre interférentiel permettant de s'affranchir de la lumière ambiante.

Un tel dispositif s'avère, à l'issue d'une phase d'expertise, être probablement la meilleure solution en termes de "facteur de mérite"/coût, le facteur de mérite tenant compte de la précision, du champ de vue et de la vitesse d'acquisition.

Avantageusement, la partie émission comprend un diaphragme situé en sortie de l'émetteur, qui est une diode laser. La partie réception comprend une lentille, un diaphragme et une lame semi-transparente qui renvoie le flux dans la pupille image sur un détecteur pour réaliser une contre-réaction sur la commande de puissance de l'émetteur optique.

L'invention concerne également un moyen d'étalonnage pour la mise en oeuvre d'une telle acquisition, caractérisée en ce qu'elle comprend deux parties séparées par un plan vertical :
- une première partie formée d'au moins une marche d'escalier d'altitude déterminée ;
- une seconde partie formée d'au moins une pente d'angle déterminée, un angle droit de la cale servant de référentiel absolu.

Avantageusement, dans une première réalisation, la première partie comprend trois marches d'escalier et permet un étalonnage selon un axe, et la seconde partie comprend deux plans inclinés et permet un étalonnage selon un autre axe.

Avantageusement, dans une seconde réalisation, la première partie est formée d'une marche mobile apte à prendre au moins trois hauteurs déterminées, et la seconde partie est formée d'une pente mobile apte à prendre au moins deux valeurs angulaires déterminées.

L'invention s'applique avantageusement à l'usinage automatique de prothèses dentaires en céramique.

Brève description des dessins

- La figure 1 représente schématiquement la partie optique du dispositif de l'invention ;
- la figure 2 représente schématiquement la partie électronique du dispositif de l'invention ;
- la figure 3 illustre le fonctionnement du dispositif de l'invention ;
- la figure 4 représente un système permettant la mise en oeuvre du dispositif de l'invention ;
- la figure 5 représente un cale d'étalonnage pour la mise en oeuvre de l'acquisition.

Exposé détaillé de modes de réalisation

Dans la suite de la description on parlera de "pixel" pour "élément d'image", quelquefois appelé "eldim".

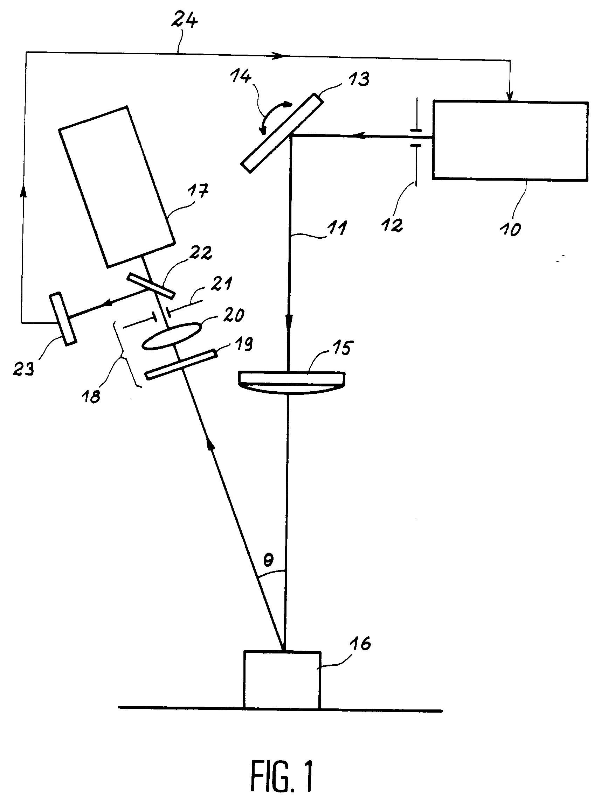

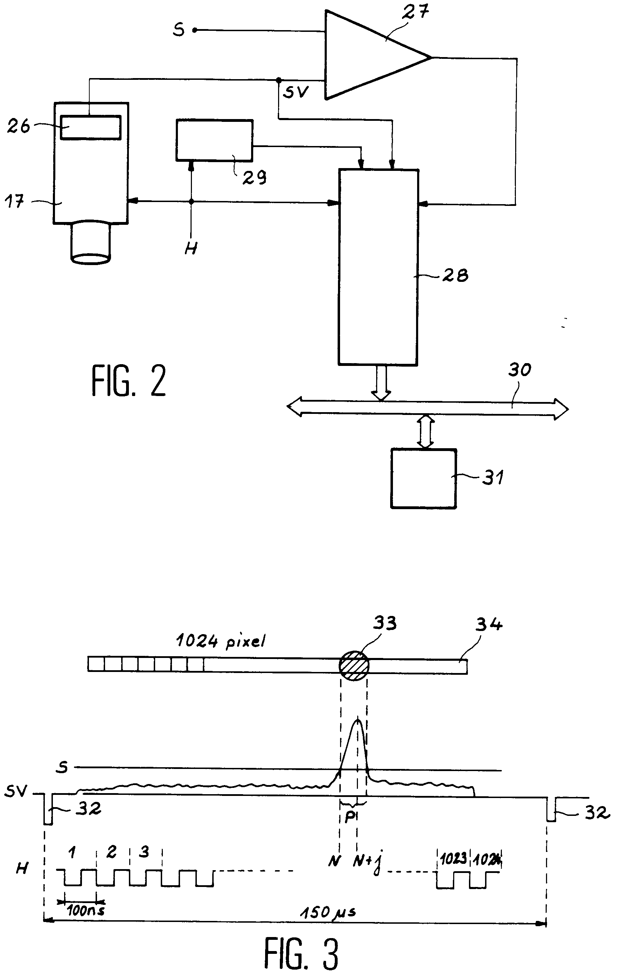

Le dispositif de l'invention comprend une partie optique représentée sur la figure 1 et une partie électronique représentée sur la figure 2.

La partie optique comprend un émetteur optique colimaté 10, par exemple une diode laser, envoyant un pinceau de lumière cohérente 11 à travers un diaphragme 12 sur un miroir mobile 13, par exemple un miroir galvanométrique, qui balaie 14 ce pinceau à travers une lentille télécentrique 15 qui transforme le balayage angulaire en translation.

Le point objet, après rétrodiffusion sur l'objet à analyser 16 selon un angle $\theta$ , est imagé sur une caméra 17, par exemple de type CCD linéaire, par un objectif 18 , une lentille 20 et un diaphragme 21. Une lame semi-transparente 22 renvoie le flux dans la pupille image sur un détecteur 23 pour réaliser une contre-réaction 24 sur la commande de puissance de l'émetteur 10.

Dans une réalisation avantageuse l'objectif 18 comprend un filtre interférentiel 19 permettant de s'affranchir de la lumière ambiante et contribuant au seuillage de la valeur pixel.

La partie électronique comprend un convertisseur analogique/numérique 26 situé à l'intérieur de la caméra 17. Ce convertisseur 26 délivre un signal SV, ici à une fréquence de 10 MHz comprenant les valeurs pixels codées sur huit bits ;durée de la ligne (1024 pixels + temps mort) inférieure à 150 $\mu$s.

Ce signal SV est entré dans un comparateur 27 qui autorise, dès que ce signal SV est supérieur à un seuil préprogrammé S, l'écriture dans une mémoire 28 de type pile, de 32 Koctets par exemple.

Un compteur 29 génère, en même temps, l'adresse N du premier pixel concerné, qui est elle aussi mémorisée. Sur la figure 2, est également représenté un organe de traitement 31, relié à la mémoire 28 par un bus 30, qui permet de traiter les informations mises en mémoire.

Sur le chronogramme représenté à la figure 3, le signal vidéo SV, comportant des synchrolignes 32, déclenche à partir de N pixels la mise en mémoire de p pixels valides (p programmé de huit à trente et un) correspondant à une tache image 33, représentée sur une barrette linéaire CCD 34 de 1024 points. L'horloge H utilisée est de 10 MHz. Par la suite l'organe de traitement 29 calcule le barycentre des p pixels valides de façon à donner le sommet exact de la courbe (de forme gaussienne). Si l'on trouve une valeur j, l'adresse du centre de la tache est alors N + j.

On utilise donc une technique de triangulation laser avec balayage point par point, la tête optique, représentée sur la figure 1, étant montée sur un premier plateau tournant, l'objet 16 sur un second plateau tournant, les deux axes, de rotation Δ et Δ' étant perpendiculaires.

Le procédé de l'invention consiste à comparer, pendant la lecture de la caméra CCD, à une fréquence par exemple de 10 MHz, la valeur pixel à un seuil programmable et à mémoriser la valeur N d'un compteur lorsque ce seuil est franchi. On mémorise alors uniquement les huit ou seize pixels d'adresse supérieure à N. Il en résulte un gain de temps et une compression d'informations (mémoire de taille réduite, pas de traitement d'images) et donc finalement un gain en coût de réalisation.

Mais certaines conditions doivent être remplies pour permettre l'utilisation de la méthode de triangulation :

- la caméra a une sortie pixel échantillonnée et numérisée à la cadence horloge (10 MHz) ; le temps entre deux synchrolignes étant égal à 150 μs (1024 x 100ns + Tm), avec un temps mort de remise à zéro (référence noir);
- l'image du point lumineux doit "sortir" très nettement du bruit. Il faut donc éviter les variations de lumière ambiante. Ceci est possible grâce au filtre interférentiel placé devant la caméra. On balaye point par point, donc à chaque pas le laser doit éclairer un point de diamètre 20 μm à mi-hauteur environ et un seul ;
- le laser est stabilisé en puissance, pour éviter de grosses fluctuations qui empêcheraient de fixer un seuil, grâce à une contre-réaction. Une photodiode reçoit une partie du flux entrant dans la pupille de l'objectif et le signal issu de cette photodiode régule le courant d'attaque de la diode laser de façon à moduler la puissance lumineuse émise en fonction des variations d'éclairement de la caméra.

Pour toutes ces raisons, le seuil est peu fluctuant et placé le plus bas possible (pour avoir un maximum de précision, il importe d'avoir un calcul de barycentre sur un nombre important de niveaux). En fait, sur 256 niveaux d'éclairement (huit bits), le seuil est fixé au-dessous du niveau 50.

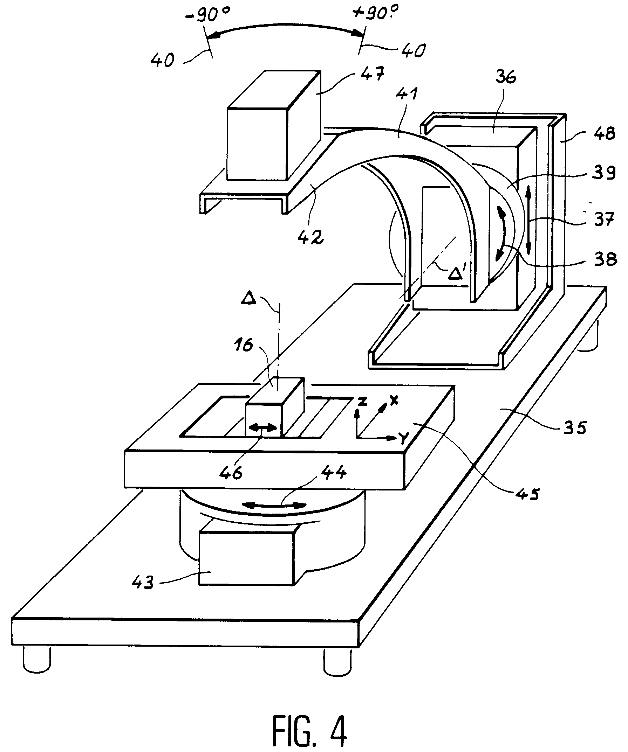

Un système permettant la mise en oeuvre du dispositif de l'invention est représenté schématiquement à la figure 4. Il comprend une platine de base horizontale 35, sur laquelle sont disposés :

- une platine manuelle 36 disposée verticalement sur un élément 48 en forme d'équerre permettant un déplacement vertical 37 (ajustement du rayon) sur laquelle peut se déplacer un plateau tournant 39 selon la direction 38 situé dans un plan vertical avec des butées 40 de fin de course (±90°). Un élément en col de cygne 41 solidaire de ce plateau tournant reçoit à son extrémité libre 47 le bloc optique 43 représenté à la figure 1 ;
- un plateau tournant 43 suivant la direction 44 sur lequel est disposé une platine 45 mobile en translation suivant la direction 46.

L'objet à analyser 16 est placé sur la platine mobile 45 afin de réaliser le balayage selon la direction Y. Le balayage suivant X est assuré par le miroir mobile 13 du bloc optique 47. Le plateau tournant 43 permet de faire tourner l'objet 16 autour d'un axe Δ pour réaliser différentes vues. La tête optique 47 est mobile en rotation autour d'un axe Δ' grâce au plateau tournant 39. La distance de mesure est réglable à l'aide de la platine 36.

Ces différents mouvements peuvent, bien entendu, être motorisés de manière à automatiser le système.

Tout déplacement de la caméra (grâce à la platine de rotation 39) est codé. Le changement de repère est une simple matrice de rotation dont l'angle est donné par le codeur. La mécanique est suffisamment précise pour que l'on n'ait pas besoin de réétalonner dans différentes positions de la caméra.

Le procédé de l'invention consiste à considérer tout point dans le champ de vue de la caméra avec ses coordonnées trois dimensions qui sont une combinaison linéaire de n points de référence (piges d'étalonnage). De même, l'image d'un tel point sur la caméra a ses coordonnées pixel qui sont une combinaison linéaire des coordonnées pixel des images dans n points de référence. Ceci n'est vrai que s'il n'y a pas de distorsion due aux optiques ; dans le cas contraire, une grille à pas régulier se transformerait en bord de champ en une figure irrégulière (dite "en coussinet" ou "en barillet"), et il ne serait plus possible d'effectuer une interpolation entre les points de référence.

On calcule les coordonnées dans un seul plan XZ, puisque l'image est générée profil après profil, la platine 45 mobile en translation Y assurant le déplacement profil après profil.

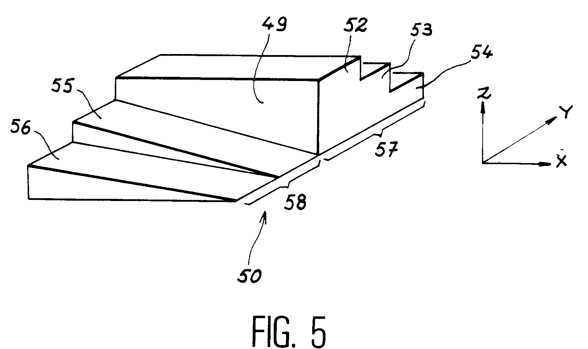

Un moyen d'étalonnage 50 selon l'invention, par exemple une cale représentée sur la figure 5, comprend deux parties séparées par un plan 49 :

- une première partie 57 comprenant trois marches d'escalier 52, 53 et 54 ;
- une seconde partie 58 comprenant successivement deux plans inclinés 55 et 56.

La première partie 57 permet un étalonnage selon l'axe Z. La seconde partie 58 permet un étalonnage selon l'axe X à partir de l'axe Z.

Ce moyen d'étalonnage est donc formé de marches d'escaliers d'altitudes $Z_1$, $Z_2$ et $Z_3$ et de pentes dont on connaît parfaitement l'angle.

$$X_1 = \alpha_1 Z$$

$$X_2 = \alpha_2 Z$$
$$X_3 = \alpha_3 Z$$

Un des angles droits du moyen d'étalonnage sert de référentiel absolu. Ce moyen d'étalonnage est positionné sur le système représenté à la figure 4 grâce à des trous de centrage.

Le moyen d'étalonnage 50 est prévu pour être utilisé sur le dispositif représenté à la figure 4.

On montre par des formules de triangulation simples que les coordonnées X et Z d'un point sur l'objet 16 sont de la forme :

$$X = \frac{a + bnx}{1 + Cnx}$$

$$Z = \frac{a' + b'nx}{1 + Cnx}$$

nx étant l'adresse pixel sur la caméra linéaire. Les coefficients a, b, a', b', c sont inconnus : il faut donc les trouver par étalonnage. Ces coefficients ne dépendent que du référentiel (X, Y, Z) choisi. Si l'on change de référentiel, on doit changer ces coefficients.

La méthode d'étalonnage consiste, dans un référentiel donné, à balayer les marches 52, 53, 54 du moyen d'étalonnage 50 qui seront donc codées dans le même référentiel absolu.

On place donc le moyen d'étalonnage 50 sur deux pions de centrage pour que le laser frappe la partie 57 de ce moyen d'étalonnage. Un coin de ce moyen d'étalonnage peut servir de référentiel absolu. En effectuant un déplacement en Y de la table 45 de translation on voit défiler, pour une direction donnée de faisceau laser, les trois marches 52, 53 et 54 à trois altitudes connues $Z_1$, $Z_2$, $Z_3$.

$$Z_1 = \frac{a' + b'nx3}{1 + Cnx1}$$

$$Z_2 = \frac{a' + b'nx2}{1 + Cnx2}$$

$$Z_3 = \frac{a' + b'nx3}{1 + Cnx3}$$

nx1, nx2, nx3 sont les coordonnées image du point laser correspondant aux trois marches.

On peut ainsi obtenir les coefficients a', b', c.

On retourne alors le moyen d'étalonnage 50 en le replaçant sur les deux pions de centrage pour que le laser frappe la partie 58 qui comporte les plans inclinés d'équations connues $X = \alpha_1 Z$ ; $X = \alpha_2 Z$.

Comme dans la phase précédente on effectue une translation en Y. On obtient les équations suivantes :

$$a + bnx1 = \alpha_1(a' + b'nx1)$$
$$a + bnx2 = \alpha_2(a' + b'nx2)$$

On peut donc obtenir a et b.

On a donc trouvé les cinq coefficients a, b, a', b' et c.

L'objet à analyser 16 peut être placé à la place du moyen d'étalonnage. Il sera repéré dans le même référentiel absolu.

Dans une position du faisceau laser on a donc un point image sur la caméra de coordonnées pixel nxi.

$$X = \frac{a + bnxi}{1 + Cnxi}$$

$$Z = \frac{a' + b'nxi}{1 + Cnxi}$$

Tout ceci est vrai pour une direction de faisceau laser. Si on fait un balayage laser de 1000 points, a chaque position j allant de 1 à 1000 on calcule les cinq coefficients $a_j$, $a'_j$, $b_j$, $b'_j$ et $c_j$.

La procédure est automatique et dure quelques minutes. Pour trouver les cotes d'un objet 16, à chaque position j du faisceau laser on applique les formules donnant X et Z.

$$X = \frac{a_j + b_j\, nxi}{1 + C_j\, nxi}$$

$$Z = \frac{a'_j + b'_j\, nxi}{1 + C_j\, nxi}$$

Ceci oblige à mémoriser 5000 coefficients. A la fin on a une courbe Z(j) et une courbe X(j) et donc un profil Z(X).

On peut alors déplacer la table Y d'un pas et réaliser un nouveau profil Z(X). La cote Y est donnée par la table qui est codée, et qui peut être motorisée.

Après 1000 déplacements de la table en Y, on obtient un volume de 1 million de points.

Le temps d'acquisition total est de l'ordre de quelques minutes.

Les essais ont montré que cette méthode d'étalonnage donnait d'excellents résultats : simplicité, possibilité d'automatiser l'étalonnage, répétabilité meilleure que 10 μm, rapidité d'exécution (quelques minutes).

Il faut insister sur les critères essentiels qui permettent de dire que l'on fait un bon étalonnage ; c'est à la fois la vitesse d'acquisition et de traitement (quelques minutes) et la précision obtenue (de l'ordre de 10 $\mu$m avec une répétabilité meilleure que 5 $\mu$m) dans la phase d'étalonnage qui permettra de réduire le coût du produit (simplification de l'étalonnage, gain de temps).

Dans l'exemple pris en compte précédemment et représenté sur la figure 5, le moyen d'étalonnage est une cale (les marches, au nombre de trois et les pentes, au nombre de deux, sont fixes). Mais ce moyen d'étalonnage peut être aussi constitué d'une marche mobile apte à prendre au moins trois hauteurs bien définies et d'une pente mobile apte à prendre au moins deux valeurs déterminées. De plus, on peut utiliser plus de trois marches, ce qui permet d'avoir plusieurs systèmes de trois équations à trois inconnues. Ceci conduit à plusieurs séries de coefficients que l'on moyenne.

Un mode de réalisation avantageux comprend une caméra trois dimensions précise et rapide, un million de points en environ trois minutes avec une précision d'environ 20 $\mu$m sur un volume d'environ 20 x 20 x 20 mm$^3$ avec une profondeur de champ de l'ordre de 10 à 15 mm.

Les contraintes prises en considération sont les suivantes :

champ en Y :     50 mm
champ en X :     25 mm
champ en Z :     20 mm
    précision en X, Y, Z : 20 $\mu$m
    vitesse d'acquisition : 5 à 10 000 pixels/seconde

soit un facteur de mérite :

$$M = \frac{20.10^3 \ \mu m}{20 \ um \ x \ \sqrt{1/10\ 000}} = 100\ 000 \ \text{(valeur maximale)}$$

L'application industrielle visée est la saisie trois dimensions de plâtres dentaires mais cette caméra est tout à fait adaptée à la saisie automatique de petits objets du même type (volume n'excédant pas 20 x 20 x 20 mm$^3$) où la précision demandée est de l'ordre de 10 à 20 $\mu$m : par exemple des touches de clavier d'ordinateur (pour vérifier leur conformité à certaines normes).

La bonne maîtrise de la technique de balayage, de l'éclairage laser et de l'étalonnage permet de faire de bons profils avec une précision bien meilleure que 20 $\mu$m sur des pentes allant jusqu'à 60°, ce qui est considéré comme des angles plus que limites pour un tel procédé. Le fait que l'on travaille sur des plâtres bien diffusants facilite grandement la résolution du problème considéré.


## Revendications

1. Procédé d'acquisition d'une image à trois dimensions d'un petit objet par palpage lumineux, caractérisé en ce que :
   - on scanne l'objet avec un pinceau cohérent selon un premier axe (X) ;
   - on déplace l'objet selon un second axe (Y) perpendiculairement au premier ;
   - on analyse le pinceau réfléchi par l'objet à l'aide d'une caméra de type CCD linéaire, en comparant le signal vidéo sortant de la caméra à un seuil préalablement défini, en mémorisant l'adresse du premier pixel concerné, lorsque ce seuil est franchi, ainsi que la valeur des p pixels suivants correspondant à la tache image (33) ;
   - on obtient les coordonnées de l'objet selon le troisième axe (Z) par triangulation laser avec balayage point par point, en considérant que tout point dans le champ de vue de la caméra avec ses coordonnées trois dimensions est une combinaison linéaire de n points référence.

2. Procédé selon la revendication 1, caractérisé en ce que pour avoir un maximum de précision le seuil est placé le plus bas possible.

3. procédé selon la revendication 1, caractérisé en ce qu'on considère que l'objet se trouve dans un champ restreint ; on utilise au moins un moyen d'étalonnage qui est le référentiel absolu, la caméra étant supposée fixe par rapport à ce référentiel.

4. Procédé selon la revendication 1, caractérisé en ce que le petit objet à analyser est une empreinte en plâtre dentaire.

5. Dispositif d'acquisition d'une image à trois dimensions d'un petit objet par palpage lumineux caractérisé en ce qu'il comprend :

- un bloc optique comportant :
  . une partie émission comprenant un émetteur optique colimaté (10) envoyant un pinceau de lumière cohérente sur un miroir mobile (13) qui balaie l'objet (16) à travers une lentille télécentrique (15),
  . une partie réception comprenant un caméra de type CCD linéaire (17) qui reçoit le pinceau réfléchi par l'objet (16) au travers d'un objectif,
- un circuit électronique comportant :
  . un convertisseur analogique numérique (26) disposé en sortie de caméra (17),
  . un comparateur (27) du signal vidéo issu du convertisseur(26) à un seuil (S) préalablement défini,
  . un compteur (29) générant l'adresse du premier pixel valide du signal vidéo (SV),
  . une mémoire (28) pour enregistrer les p pixels valides, et l'adresse du premier de ces p pixels ;
- un organe de traitement (29).

**6.** Dispositif selon la revendication 5, caractérisé en ce que l'objectif comprend un filtre interférentiel (19).

**7.** Dispositif selon la revendication 5, caractérisé en ce que la partie émission comprend un diaphragme (12) situé en sortie de l'émetteur (10).

**8.** Dispositif selon la revendication 5, caractérisé en ce que l'émetteur est une diode laser.

**9.** Dispositif selon la revendication 5, caractérisé en ce que l'objectif (18) comprend une lentille (20) et un diaphragme (21).

**10.** Dispositif selon la revendication 5, caractérisé en ce que la partie réception comprend une lame semi-transparente (22) qui renvoit le flux dans la pupille image sur un détecteur (23) pour faire une contre-réaction sur la commande de puissance de l'émetteur (10).

**11.** Moyen d'étalonnage pour la mise en oeuvre de l'acquisition d'une image à trois dimensions d'un petit objet par palpage lumineux, caractérisé en ce qu'il comprend deux parties séparées par un plan vertical (49) :
   - une première partie (57) formée d'au moins une marche d'escalier d'altitude déterminée ;
   - une seconde partie (58) formée d'au moins une pente d'angle déterminé, un angle servant de référentiel absolu.

**12.** Moyen d'étalonnage selon la revendication 11, caractérisé en ce que la première partie (57) comprend au moins trois marches d'escalier (52, 53, 54) et permet un étalonnage selon un axe (Z), et en ce que la seconde partie (58) comprend au moins deux plans inclinés (55, 58), et permet un étalonnage selon un autre axe (X).

**13.** Moyen d'étalonnage selon la revendication 11, caractérisé en ce que la première partie (57) est formée d'une marche mobile apte à prendre au moins trois hauteurs déterminées, et en ce que la seconde partie (58) est formée d'une pente mobile apte à prendre au moins deux valeurs angulaires déterminées.

FIG. 1

FIG. 2

FIG. 3

10

FIG. 4

FIG. 5

Office européen
des brevets

**RAPPORT DE RECHERCHE EUROPEENNE**

Numero de la demande

EP 93 40 2928

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | PROCEEEDINGS OF THE IEEE<br>vol. 72, no. 12 , Décembre 1984 , NEW YORK, USA<br>pages 1821 - 1822<br>M.ALI KUJOORY 'Real-Time Range and Elevation Finder' | 1,5,8,9 | G01B11/24<br>G01B11/02 |
| Y | | 1,5 | |
| A | | 7 | |
| | --- | | |
| X | PROC. 12TH ANN. INT. CONF. OF THE IEEE, ENGINEERING IN MEDECINE AND BIOLOGY SOCIETY<br>vol. 12 , 1990 , PHILADELPHIA, PENN., USA<br>pages 2052 - 2053 XP000238957<br>K. YAMATOTO ET AL 'Three-Dimensional Measurement of Dental Cast Profiles and its Applications to Orthodontics' | 1,3-5,8,9 | |
| Y | * page 2052, alinéa 3 - page 2053, alinéa 2; figures 1,3 * | 1,5 | |
| | --- | | |
| X | EP-A-0 192 993 (H.A. KAPPNER) | 1,3,5,8-11 | **DOMAINES TECHNIQUES RECHERCHES (Int.Cl.5)** |
| Y | | 1,5 | G01B |
| A | | 7 | |
| | * colonne 2, ligne 42 - colonne 5, ligne 38; figures 1,2 * | | |
| | --- | | |
| X | US-A-4 650 335 (TOKUHISA ITO ET AL) | 1-3,5,7-9 | |
| Y | | 1,5 | |
| | * colonne 2, ligne 23 - colonne 2, ligne 68; figure 1 *<br>* colonne 3, ligne 66 - colonne 6, ligne 3; figures 2-4 * | | |
| | --- | | |
| | -/-- | | |

Le présent rapport a été établi pour toutes les revendications

| Lieu de la recherche | Date d'achèvement de la recherche | Examinateur |
|---|---|---|
| LA HAYE | 8 Mars 1994 | Visser, F |

EPO FORM 1503 03.82 (P04C02)

Office européen
des brevets

# RAPPORT DE RECHERCHE EUROPEENNE

Numero de la demande

EP 93 40 2928

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X,P | EP-A-0 571 769 (NIKON CORPORATION)<br>* titre *<br>* colonne 3, ligne 42 - colonne 5, ligne 50; figures 6A-9 *<br>--- | 1,4,5,8 | |
| X | PATENT ABSTRACTS OF JAPAN<br>vol. 10, no. 183 (P-472)(2239) 26 Juin 1986<br>& JP-A-61 029 709 (HITACHI ZOSEN CORP.) 10 Février 1986<br>* abrégé * | 1,3,5, 10,12 | |
| Y | | 1,5 | |
| | --- | | |
| A | PATENT ABSTRACTS OF JAPAN<br>vol. 7, no. 290 (P-245)(1435) 24 Décembre 1983<br>& JP-A-58 165 015 (TOKYO SHIBAURA DENKI K.K.) 30 Septembre 1983<br>* abrégé *<br>----- | 1,5 | |

**DOMAINES TECHNIQUES RECHERCHES (Int.Cl.5)**

Le présent rapport a été établi pour toutes les revendications

| Lieu de la recherche | Date d'achèvement de la recherche | Examinateur |
|---|---|---|
| LA HAYE | 8 Mars 1994 | Visser, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.....................................................................
& : membre de la même famille, document correspondant

EPO FORM 1503 03.82 (P04C02)